# EUROPEAN PATENT SPECIFICATION

(11) **EP 4 231 200 B1**
(45) Date of publication and mention of the grant of the patent: **04.03.2026**
(21) Application number: 22189104.7
(22) Date of filing: 05.08.2022
(51) Int. Cl.: G06N 3/0495, G06N 3/063, G06N 3/084, G06N 3/0464, G06N 3/045, G06N 3/044

(54) **DISTRIBUTED MACHINE LEARNING INFERENCE**
VERTEILTE MASCHINENLERNINFERENZ
INFÉRENCE D'APPRENTISSAGE MACHINE DISTRIBUÉ

(30) Priority: 17.02.2022 US 202217674181
(43) Date of publication of application: 23.08.2023
(73) Proprietor: Hewlett-Packard Development Company, L.P., Spring, TX 77389 (US)
(72) Inventor: KULKARNI, Varun Ajay, Santa Cruz, 95060 (US); BALAVALIKAR KRISHNAMURTHY, Raghavendra, Santa Cruz, 95060 (US); ZHANG, Kui, Santa Cruz, 95060 (US); WANG, David, Santa Cruz, 95060 (US)
(74) Representative: Haseltine Lake Kempner LLP

(56) References cited:
- CN-A- 108 921 182
- CN-A- 109 284 761
- CN-A- 112 382 302
- CN-A- 112 436 856
- CN-A- 113 869 304
- US-A1- 2021 117 728

## Description

### BACKGROUND

Embedded processors are often lightweight processors used in embedded systems. Embedded processors generally use less power and have less hardware resources than general purpose computing devices in laptops, servers, and other computing devices. Embedded processors are often used in peripheral devices, such as web cameras, appliances, and other devices. Because embedded processors are lightweight, the instruction size of the embedded processor is reduced as compared to central processing unit (CPU).

Machine learning models have different stages of a training time, deployment time, and inference time. Training time is when the machine learning model is trained to perform a prediction task. Deployment time is the time in which the machine learning model is transferred to the computing system that will execute the model with new input. Inference time is the time in which a machine learning model executes with new input to perform the prediction task. Thus, machine learning inference is the process of using a deployed machine learning model to make a prediction about new input.

To deploy a machine learning model, which has been trained on a CPU, on an embedded processor, the machine learning model is transformed through a quantization process to the reduced instruction size that changes the floating point version of the model to a fixed point version. Quantization is a process of mapping more precise values (i.e., the floating point values) to a less precise set of values (i.e., the fixed point values). The transformation is often not straightforward as different instructions are supported in the different instruction sizes. Thus, deployment of a program to an embedded processor may be time consuming as a quantization loss can occur that affects the accuracy of the model. Thus, the transformation needs to account for the quantization loss.

CN108921182 describes an FPGA feature extraction image sensor, which is composed of an image sensor. CN112436856 describes a security sensor including a microphone configured to output a signal indicative of audio in the environment. US2021117728 describes a training framework for performing machine learning on extremely large datasets. CN112382302 discloses an infant cry recognition method and terminal equipment. CN109284761 discloses an image feature extraction method.

### SUMMARY

In general, in one aspect, one or more embodiments relate to a method as set out in claim 1.

In general, in one aspect, one or more embodiments relate to a system as set out in claim 9.

Preferred embodiments are defined by the dependent claims.

### BRIEF DESCRIPTION OF DRAWINGS

Reference is made to the attached figures. Like elements in the various figures are denoted by like reference numerals for consistency.
FIG. 1 shows a diagram of a machine learning model in accordance with one or more embodiments.
FIG. 2 shows a schematic diagram in accordance with one or more embodiments.
FIG. 3 and FIG. 4 show device diagrams in accordance with one or more embodiments.
FIG. 5 shows a diagram of multiple machine learning models in accordance with one or more embodiments.
FIG. 6 shows a flowchart for training the machine learning models in accordance with one or more embodiments.
FIG. 7 shows a flowchart for executing the machine learning model in accordance with one or more embodiments.
FIG. 8 shows a flowchart for using the model result in accordance with one or more embodiments.
FIG. 9 and FIG. 10 show an example in accordance with one or more embodiments.

### DETAILED DESCRIPTION

The general steps to execute a machine learning model (i.e., "model") on an embedded processor are to train the machine learning model on computer equipped with powerful processors and then transform the trained model to a fixed-point version of the model for the embedded processor. The reason for this two part approach is that training is a computationally expensive process in which a large volume of training data is passed through the model in order to make the model more accurate. Thus, it can be time and storage prohibitive to train directly on the embedded processor. In contrast, the fixed point version of the model is a smaller model that has faster execution time and uses less storage space.

Machine learning frameworks are built with floating point precision. Thus, the model is trained with such precision. Then, the trained model is transformed to a fixed-point version of the model for the embedded processor. Here, rather than deploying the complete floating point version of the model to the device having the embedded processor, embodiments only deploy a portion of the model to the device with the embedded processor. Thus, only a portion of the model is transformed from floating-point to fixed-point. The remaining portion of the machine learning model is offloaded to a processing device that executes a floating-point portion of the model.

Thus, the machine learning model is divided into multiple parts when deployed such that the machine learning model may be distributed to multiple devices at inference time. A first part of the model is a fixed point version of the model while a second part of the model is a floating point version of the model. By dividing the machine learning model, efficiency of the overall system is improved by reducing the amount of data needed to be transferred to the processing device, and reduces costs associated with putting a more heavyweight processor in the input device.

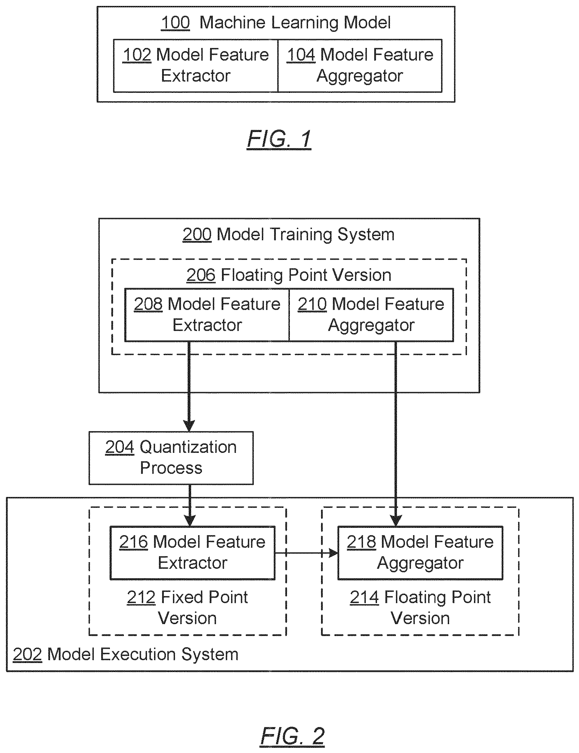

FIG. 1 shows a diagram of a machine learning model in accordance with one or more embodiments. As shown in FIG. 1, the machine learning model (100) is partitioned into a model feature extractor (102) and a model feature aggregator (104). The model feature extractor (102) is a first portion that includes functionality to feature extraction from an input. Specifically, the model feature extractor (102) includes functionality to transform a computer encoded version of the input into a set of features. The set of features may be stored as a feature vector. For a neural network model, such as a convolutional neural network (CNN) or recurrent neural network (RNN), the model feature extractor (102) includes a subset of the neural network layers. For example, the model feature extractor (102) may include an input layer and one or more hidden layers. The feature extraction reformats, combines, and transforms input into a new set of features. In a CNN, the feature extraction transforms an input image by representing a large number of pixel values of an input image into a new format that efficiently captures the target characteristics of the image, in another word, from pixel values to feature space. Feature extraction as used in this application corresponds to the standard definition used in the art.

The model feature aggregator (104) includes functionality to aggregate the extracted features and generate the output (*i.e.,* the model result) of the model. For the neural network model, the model feature aggregator includes a second subset of neural network layers. For example, the model feature aggregator may include one or more hidden layers and the output layer. The output layer is dependent on the functionality of machine learning model and produces the model result. The model result is the result of executing the complete model (e.g., the purpose or target output for the model). For example, for face detection, the model result may be the location of bounding boxes around faces in an input image. As another example, for attention status detection, the model result is a classification of the level of attention of a target participant. Feature extraction and feature aggregation as used in this application correspond to the standard definitions used in the art of machine learning.

FIG. 2 shows a schematic diagram for training and deploying the machine learning model in accordance with one or more embodiments. As shown in FIG. 2, a model training system (200) is connected to a model execution system (202). The model training system (200) is a computing system that is capable of executing a floating-point version (206) of the model that includes the model feature extractor (208) and the model feature aggregator (210). For example, the computing system may be a server, desktop, laptop, or other computing system that includes a processor that supports various kinds of models, having various precisions. For example, the processor may be a graphics processing unit (GPU), central processing unit (CPU), a deep learning processor (DLP). The model feature extractor (208) and the model feature aggregator (210) is the same as described in FIG. 1, but in floating-point version (206). Training a machine learning model is generally computationally expensive. Training is possible within a reasonable time because the model is trained on the more robust processor.

After training, the model is deployed to a model execution system (202). The model execution system (202) includes functionality to execute the model with new input as the input is being received. Specifically, the model execution system includes functionality to execute a fixed-point version (212) of the model feature extractor (216) and a floating-point version (214) of the model feature aggregator (218). The model feature extractor (216) and the model feature aggregator (218) is the same as described in FIG. 1, but in the fixed-point version (212) and the floating-point version (214), respectively.

The model training system (200) and the model execution system (202) may have different digital number representation. For example, floating-point version (206) usually uses 32-bit, the fixed-point version (212) of the model feature extractor may be 8-bit,4-bit, or even 1-bit.

Because the precision of the model changes when it is converted from floating to fixed-point version, to maintain accuracy, careful quantization is performed. Notably, the weights of the model do change and the goal of the quantization procedure is to minimize the weight difference before and after quantization. A quantization process (204), which is software code in execution, is configured to perform the transformation. Specifically, the quantization process (204) obtains, as input, the floating-point version (206) of the model feature extractor (208) and generate, as output, the fixed-point version (212) of the model feature extractor (216). Although not shown in FIG. 2, a transformation process may also be applied to the floating-point version of the model feature aggregator (210) to generate a different floating-point version (214) of the model feature aggregator (218).

By way of an example, the floating point version of the model may be a 32 bit version of the model. The fixed point version of the model feature extractor may be an 8 bit version. By switching from the 32 bit to the 8 bit, the size of the model feature extractor is reduced approximately by a factor of 4, thereby reducing storage space and increasing execution speed. Thus, the embedded processor may be able to execute the model feature extractor. In some embodiments, the quantization process applied to the model feature extractor may be easier to perform while maintaining threshold accuracy because of general commonality across various types of models. For example, the quantization process may previously have been performed on other model feature extractors. The other model feature extractors may be similar to the target model feature extractor. Because of the similarity, the quantization process on the target model feature extractor may be easier. However, applying the quantization process to the model feature aggregator may be more of a challenge to maintain accuracy. For example, the layers of the model feature aggregator may be more sensitive to quantization loss. By dividing the model feature extractor from the model feature aggregator, one or more embodiments provide a technique to deploy the model in part on the embedded processor while maintaining accuracy.

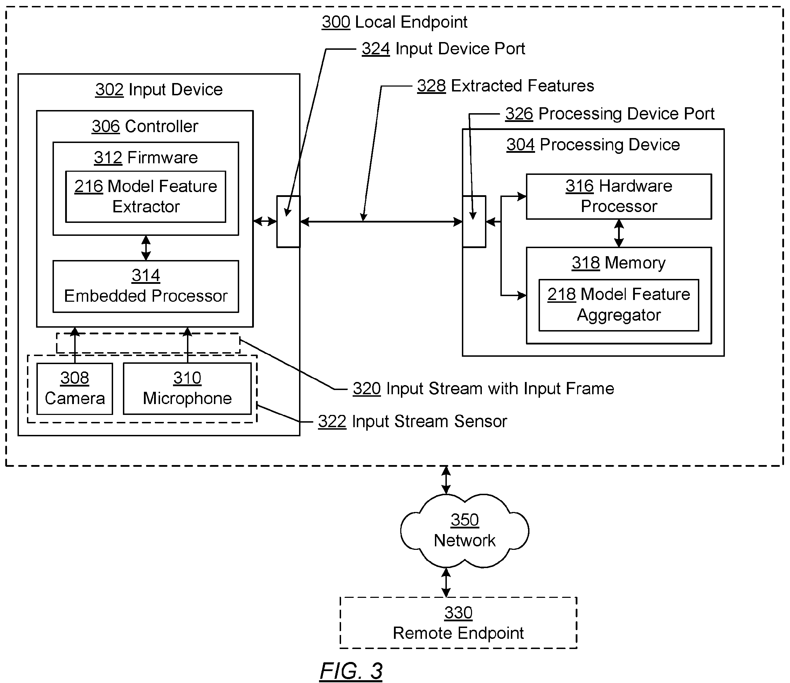

FIG. 3 shows a device diagram in accordance with one or more embodiments. Specifically, FIG. 3 shows a detailed diagram of the model execution system (202) in accordance with some embodiments. In the system, a local endpoint (300) is optionally connected to a remote endpoint (330). An endpoint is the terminal of a connection that provides input/output to a user. For example, an endpoint may be a terminal of a conference call between two or more parties. As another example, the endpoint may be a terminal by which a user creates a recording. A local endpoint is the one or more devices that connect one or more local users. For example, the local endpoint (302) may be a conference endpoint or audio/video endpoint that transmit an audio or video stream captured local to the endpoint to a remote system via the network (350). The remote system may be a remote endpoint (330) that plays the transmitted audio or video stream or storage (not shown). Conversely, the remote endpoint (330) may obtain and transmit audio or video stream captured remotely to the local endpoint (300) via the network (not shown). The obtaining and transmission is performed real-time in order to avoid a delay.

As shown in FIG. 3, an input device (302) is connected to a processing device (304). The input device (302) and processing device (304) can be individual devices each having separate housing. For example, the processing device (304) and input device (302) may be completely independent, individually housed devices that are connected only via respective hardware ports. The input device (302) is connected to the processing device (304) via respective hardware ports (i.e., input device port (324), processing device port (326)). The hardware ports may be for wired or wireless connections. For example, the hardware ports may be universal serial bus (USB) or BLUETOOTH^{®} or nearfield connections.

Turning to the input device (302), the input device (302) is a user interface that detects video or audio streams. For example, the input device (302) may be a video bar, a webcam, a headset, a phone, or another type of device that is configured to capture audio or video content. The input device (302) includes an input stream sensor (322). An input stream can be an audio stream or a video stream. Depending on the nature of the input stream, the input stream sensor (322) may be one or more cameras (308) or one or more microphones (310). Although not shown, the input stream (320) may be preprocessed and transmitted on the network either directly from the input device (302), via the processing device (304), or via another device that is not shown.

The input stream (320) includes a series of input frames, which are frames of audio or video signals. For video, the input frame may be a video frame in the video stream. For audio, the input frame may be an audio frame, or a sample of audio signals, in the audio stream.

The input stream sensor (322) are connected to a controller (306). The controller (306) is a local processing module that controls the operations of the input device (302). The controller (306) includes an embedded processor (314) configured to execute the model feature extractor (216) stored in firmware (312). The controller (306) may include additional components related to the processing and presenting of input streams, as well as other aspects of controlling the input device in accordance with one or more embodiments. An embedded processor may be a lightweight processor. For example, the embedded processor may only support fixed-point operations. Using an 8-bit operation may assist with increase in inference speed, reduced memory usage, reduced CPU usage and reduced usage of other related resources, such as digital signal processors.

As discussed above, the embedded processor (314) executes the fixed point version of the model feature extractor (216) to generate extracted features (328). The input device (302) is configured to transmit the extracted features (328) to the processing device (304) using input device port (324). The data size of the extracted features (328) is less than the input frame. Thus, the extracted features (328) take less time for transmission than the input frame and the amount of bandwidth used is less than if the full input frame were transmitted.

The processing device (304) is a separate and distinct device from the input device (302). For example, the processing device (304) may be a computing system, a USB dongle, or another device. The processing device (304) includes a hardware processor (316) that supports floating point operations. For example, the hardware processor (316) may be a GPU, CPU, a DLP, or processing component configured to process floating point versions of a model. The hardware processor (316) is connected to memory (318) that stores the floating-point version of the model feature aggregator (218). Memory is any type of storage, including firmware, that stores data temporarily, semi-permanently, or permanently.

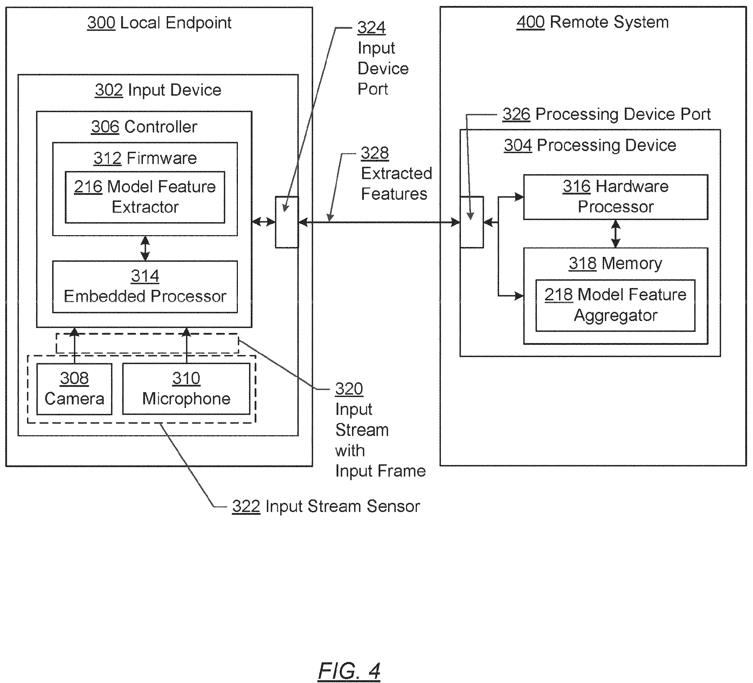

FIG. 4 shows another device diagram in accordance with one or more embodiments. Like named and referenced components in FIG. 4 as compared to FIG. 3 correspond to the same components as shown in FIG. 3 and described above. In the configuration shown in FIG. 4, the processing device is located at a remote system (400) rather than on premises. For example, the remote system (400) may be in a different room, building, country, etc. from the local endpoint. By way of an example, the remote system may be a server of a communication application that is an intermediary between the local endpoint and the remote endpoint. In such a scenario, the respective ports may be network communication ports and the connection may be an indirect connection. Many different configurations of the processing device (304) and the input device (302) may be used and embodiments are not limited to the particular configurations shown in FIG. 3 and FIG. 4.

As shown in FIG. 3 and FIG. 4, embodiments divide the execution of the machine learning model into two portions, the first portion that executes on the input device (302) and the second portion that executes on the processing device (304). For the first portion, the quantization processing is easier than for the second portion. Because the second portion does not need to be transformed to the fixed point version, deployment of the model to the local endpoint is faster. Concurrently, because the data size of the extracted features are less than the data size of the input frame, the overall processing of the model is reduced.

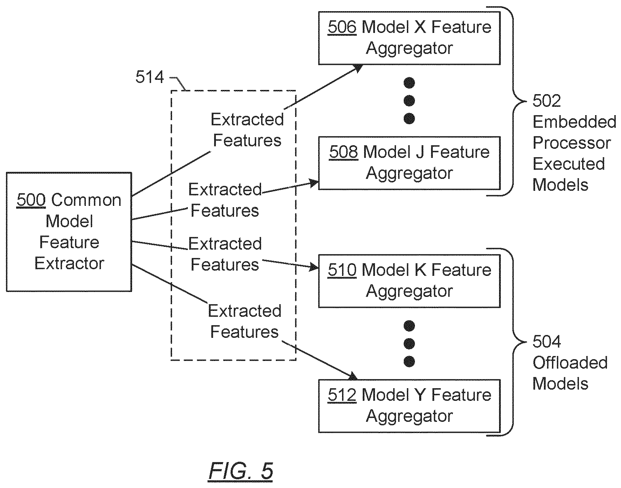

Additionally, separating the model feature extractor (216) from the model feature aggregator (218) adds a benefit that the same model feature extractor (216) may be used for multiple model feature aggregators to support multiple machine learning models. FIG. 5 shows a diagram of multiple machine learning models in accordance with one or more embodiments.

As shown in FIG. 5, the model feature extractor is a common model feature extractor (500). A common model feature extractor (500) is a model feature extractor that is common amongst multiple machine learning models. Namely, the common model feature extractor (500) is trained to provide a common set of extracted features (514) to each model feature aggregator (506, 508, 510, 512) associated with multiple machine learning models. Each model feature aggregator (506, 508, 510, 512) corresponds to an individual model that is configured to perform a particular type of inference. For example, one model may be configured to perform object detection, another model may be configured to perform speaker detection, another model may be configured to perform participant status analysis, and another model may be configured to detect the objects in a room. The various models may also use as input, the same input frame. The extracted features (514) are a set of features that are extracted from the input frame to provide input for the various different models. By sharing a common model feature extractor (500), the processing cost of adding another machine learning model is reduced to the processing costs of adding a model feature aggregator along with any communication costs to send the extracted features to the model feature aggregator.

In some embodiments, one or more of the model feature aggregators (506, 408) may be embedded processor executed models (502). Embedded processor executed models (502) are models that are not offloaded, but rather executed on the embedded processor of the input device. Thus, the embedded processor executed models (502) are fixed-point versions of the respective model feature aggregators (506, 508). Such models may be executed on the input device because even minimal latency associated with offloading to obtain the model result is unacceptable. For example, the minimal latency may cause a speaker's voice to not match the speaker's face or for the presented view to focus on a past speaker.

The offloaded models (504) are models that are offloaded to the processing device for execution. The offloaded models (504) have floating-point versions of the respective model feature aggregators (510, 512).

The offloaded models (504) are each configured to provide a model result. A few microseconds delay may exist between the transmission of the extracted features (514) to the offloaded models and the model results. The few microseconds delay is an added latency during inference time between the generation of the input frame and generation of the model result.

However, by offloading model feature aggregator to a processor that can handle the floating point version, the quantization process is not performed when the machine learning model is deployed. Thus, the deployment time of deploying the trained machine learning model is reduced.

Further, because the embedded processor of the input device does not need to execute all of the machine learning models and a common model feature extractor is used, more machine learning models are able to be executed while complying with the respective latency requirements.

Although FIG. 5 shows the common model feature extractor (500) as individually providing the extracted features to each of the model feature aggregators, a separate component may send the extracted features to each model feature extractor or each model feature aggregator may be separate configured to read the extracted features to storage. Further, a single set of extracted features may be sent to the processing device, and the processing device may provide the extracted features to each of the offloaded models (404).

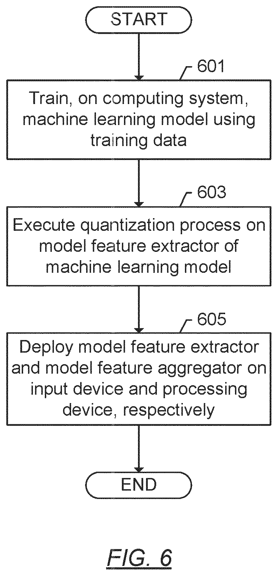

FIG. 6 shows a flowchart for training and deploying the machine learning models in accordance with one or more embodiments. As shown in FIG. 6, the computing system trains the machine learning model using training data in Block 601. Training the machine learning model may be performed using supervised learning, whereby input frames used for training (i.e., training input frames) are prelabeled with the correct output. The model is executed to generate predicted output from the training input frames, and the predicted output is compared to the correct output. The weights of the model are updated using a loss function based on the comparison, such as through back propagation. Using back propagation, the weights of the layers of the neural network are updated in reverse order than the order of execution. Thus, the weights of the model feature aggregator are updated before the model feature extractor.

If multiple models are used that have a common model feature extractor, then the common model feature extractor is trained to provide the union of extracted features that are used across all connected models. Training in the case of multiple models may be performed as follows. In one technique, a general pre-trained model feature extractor as the common model feature extractor may be used. The back propagation to update the weights of the model may stop once the weights of the model feature aggregator are updated. Thus, during training, the weights of the common model feature extractor are not updated.

In another example training method, the common model feature extractor is jointly trained for each of the models. Specifically, the same input frame may be labeled with the correct output of the different models. The various models may be jointly trained by updating the weights for the particular model feature aggregator based on the respective model output and corresponding labels. Then, the updates at the model feature extractor level may be combined across the machine learning models to generate combined updates for weights. The combined updating of weights may be applied to the common model feature extractor and back propagated through the common model feature extractor. In such a scenario, the various machine learning models are jointly trained. Other techniques for training the model architecture shown in FIG. 5 may be performed as defined by the scope of the claims.

In Block 603, a quantization process is executed on the model feature extractor of the machine learning model. The quantization process transforms the instructions of the floating-point version of the common model feature extractor to an equivalent set of instructions to create the fixed-point version. Specifically, the quantization process changes the model weights from floating point to fixed point. For example, the quantization process may change 32 bit floating number weights to 8 bit fixed point number weights. Standard publicly available libraries may be configured to perform the quantization process.

In Block 605, the model feature extractor and the model feature aggregator are deployed on the input device and processing device, respectively. The firmware of the input device is updated with the model feature extractor. Similarly, the memory of the processing device is updated with the model feature aggregator. As part of deployment, the model feature extractor and model feature aggregator may be configured to communicate, such as through a configuration file. Once deployed, the machine learning model may be executed in real time.

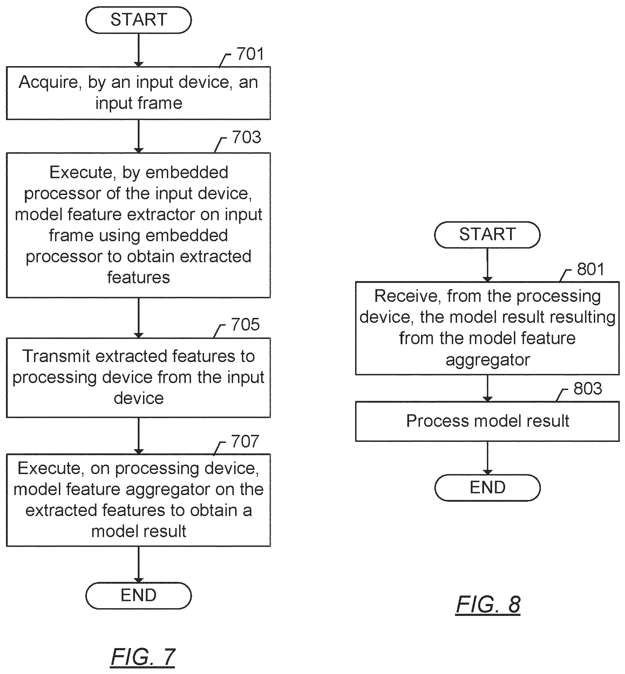

FIG. 7 shows a flowchart for executing the machine learning model in accordance with one or more embodiments.

In Block 701, an input device acquires an input frame. An input sensor, such as the camera or microphone, detects audio or video input and converts the input to electrical signals in the form of an input stream. If the input is video, a video frame is extracted from the video stream. The length of the input frame and the interval in which an input frame is extracted is dependent on the machine learning model or collection of machine learning models. For example, the input device may be configured to extract a video frame every 5 microseconds of the video stream. The video frame may be a single image or a collection of images in series. If the input is audio, a sample of audio is extracted from the audio stream. Similar to the video, the input device may be configured to extract a couple of seconds of the audio stream every few seconds.

In Block 703, the embedded processor of the input device executes the model feature extractor on the input frame using the embedded processor to obtain extracted features. The input frame is used as input to the model feature extractor. Prior to using the input frame as input, preprocessing may be performed on the input frame. For example, if the input frame is audio, a filter may be applied. As another example, if the input frame is audio and the model is a CNN, an image form of the sample of audio may be generated, such as by generating a graph of the sample of audio. The preprocessed input frame may then be used as input to the model feature extractor if preprocessing is performed. The model feature extractor executes the initial subset of layers of a neural network on the input frame. The output of the final hidden layer of the model feature extractor is a set of extracted features.

In Block 705, the extracted features are transmitted to the processing device from the input device. The embedded processor initiates transmission on the input device port to the processing device port. The embedded processor may also trigger execution of one or more embedded processor executed model feature aggregators. The processing device receives the extracted features via the processing device port.

In Block 707, the processing device executes the model feature aggregator on the extracted features to obtain a model result. The hardware processor of the processing device executes the model feature aggregator using the extracted features as input. The execution processes the extracted features through a second subset of neural network layers. The result is the model result for the particular model. If multiple machine learning models execute, then each model feature aggregator may individually generate a model result for the model feature aggregator. The model result is dependent on the machine learning model.

If multiple machine learning models are used that share a common model feature extractor, the model feature aggregator for some models may not execute at the same interval as other model feature aggregators. For example, a model feature aggregator may execute every 10 times that the model feature extractor executes.

FIG. 8 shows a flowchart for using the model result in accordance with one or more embodiments. In Block 801, the model result, resulting from executing the model feature aggregator, is received from the processing device. The processing device may transmit the model result back to the input device for further processing or to another device. For example, if the machine learning model is to trigger an action on the input device, then the processing device may transmit the model result to the input device. By way of another example, if the processing device is a dongle that has a DLP for execution machine learning algorithms, the processing device may transmit the model result to the input device, which does any processing. As another example, the processing device may transmit the model result to a third party. For example, if the model result triggers an adjustment of the input stream and the processing device is in the pathway of transmitting the input stream to the remote endpoint, the processing device may update the input stream.

At any stage, before, during, or after transmission, postprocessing may be performed on the model result. For example, the post processing may be to transform the model result to an action identifier of the action to trigger.

In Block 803, the model result is processed. Processing the model result may be to display information in a graphical user interface according to the model result, transform the input stream according to the model result (e.g., modify the audio stream or the video stream by changing the audio or video), appending metadata to the input stream, transmitting an alert, or performing another action as triggered by the model result. If multiple machine learning models are executed, then each action of each machine learning model may be performed.

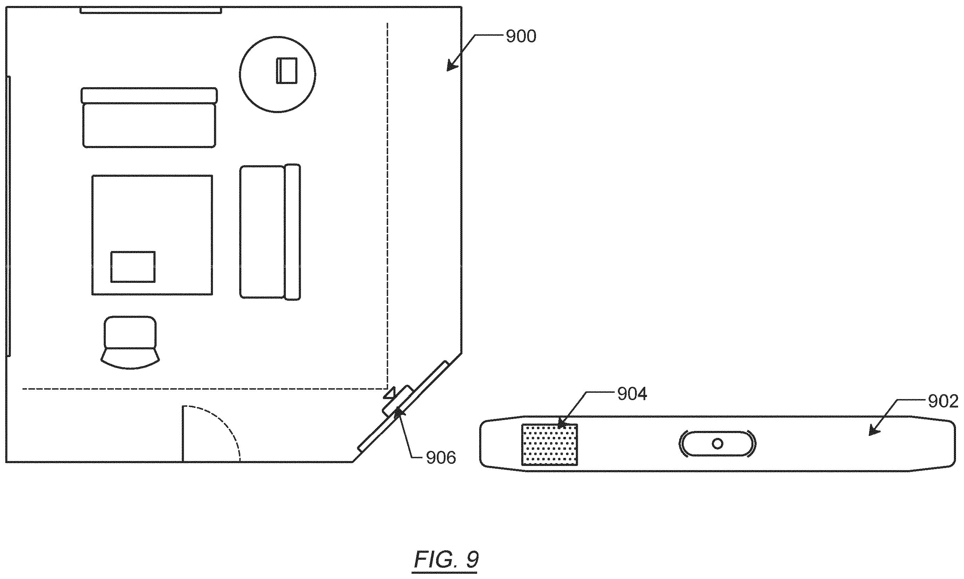

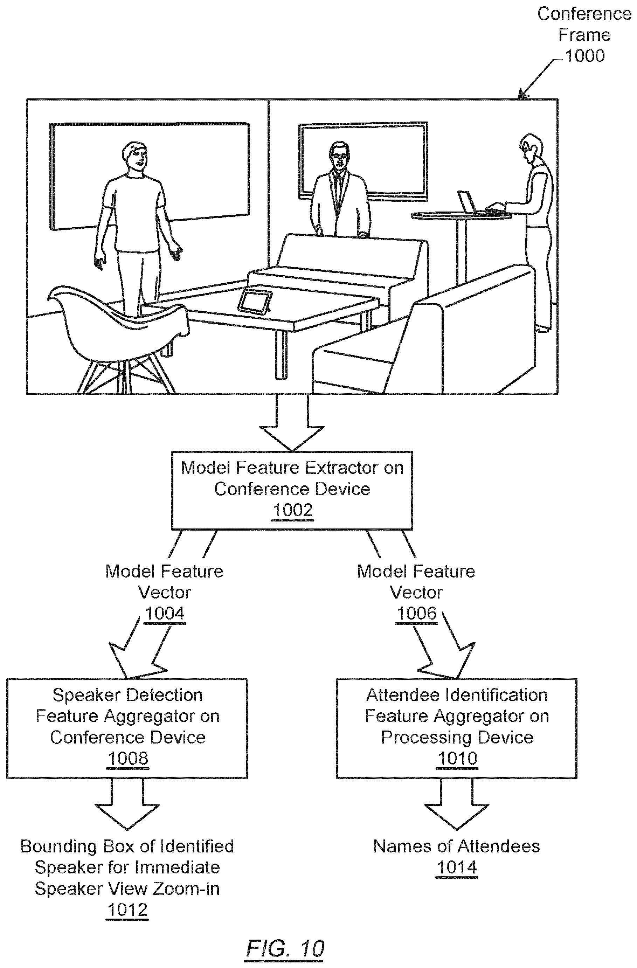

FIG. 9 and FIG. 10 show an example in accordance with one or more embodiments. In FIG. 9 and FIG. 10 the input device is a conference device for use during a conference call. FIG. 9 shows a layout of a conference room (900) with the conference device (902) in the corner. The conference device is a video bar as shown in the exploded view that has a camera and speakers. Inside the video bar is an embedded processor that performs lightweight processing for the video bar. The conference device is connected to processing device, which is a USB dongle with a DLP processor.

Turning to FIG. 10, during a conference call, machine learning models are configured to execute. For example, one model may be designed to detect the speaker in the video stream (i.e., speaker detection) while another machine learning model may be to identify attendees in a conference room (i.e., attendee identification) as metadata in the conference stream. Because the speaker detection changes the focus of the video stream, the speaker detection is performed on the video bar. Because the attendees in a conference room generally do not change frequently during the conference call, the attendee identification is performed on the DLP processor of the USB dongle.

During the conference call, the camera of the video bar captures a video stream. From the video stream, conference frame (1000) is extracted. Model feature extractor (1002) executes to generate a single model feature vector with the same extracted features for each model. The model feature vector is transmitted (1004, 806) to the speaker detection feature aggregator (1008) on the speaker bar and the attendee identification feature aggregator (1010) on the USB dongle. The speaker bar executes the speaker detection model feature aggregator (1008) to detect the current speaker and generates a bounding box of the identified speaker for immediate speaker view (1012). Using the bounding box, the conference device immediately adjusts the camera view to the current speaker. The attendee identification feature aggregator on the processing device (i.e., USB dongle) may execute to identify names of the attendees (1014). The processing device may send the names to the conference device, which adds the names as metadata to the video stream or otherwise updates the video stream with the names of attendees.

By offloading the attendee identification, the execution of the speaker detection is not slowed by the attendee identification model. Thus, the overall system is able to achieve greater functionality. Additionally, the deployment time of the attendee identification model is reduced because the attendee identification model does not need to be modified to the fixed point version.

The hardware processor of the system is further configured to execute a quantization process 204 to reduce a floating-point version 206 of the model feature extractor 208 to a fixed-point version 212 of the model feature extractor 216.

In examples herein described the input stream sensor 322 may comprises a camera 308 configured to capture a video stream comprising the input frame, wherein the input frame is a video frame in the video stream, the model feature extractor 216 may comprise a first subset of neural network layers of a convolutional neural network, CNN, and the model feature aggregator 218 may comprise a second subset of neural network layers of the CNN.

In examples herein described the input stream sensor 322 may comprise a microphone 308 configured to capture an audio stream comprising the input frame, wherein the input frame is a sample of audio in the audio stream , the model feature extractor 216 may comprise a first subset of neural network layers of a recurrent neural network, RNN, and the model feature aggregator 218 may comprise a second subset of neural network layers of the RNN.

In examples herein described the system may further comprise: an embedded processor executed model 502 comprising a second model feature aggregator 506, 508 that executes on the plurality of extracted features, wherein the model feature aggregator is a first model feature aggregator 510, 512 and is an offloaded model 504, and the model feature extractor 216 is a common model feature extractor 500 for the second model feature aggregator 506, 508 and the first model feature aggregator 510, 512.

In examples herein described the system may further comprise: a plurality of model feature aggregators 502, 504 configured to individually execute the plurality of extracted features to obtain a plurality of model results, wherein: the model feature aggregator 218 is one of the plurality of model feature aggregators 502, 504, the model feature extractor 216 is a common model feature extractor 500 for the plurality of model feature aggregators 502, 504 and the first model feature aggregator 510, 512, and the plurality of model results comprises the model result

In the application, ordinal numbers (e.g., first, second, third, etc.) are used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

Further, the term "or" in the description is intended to be inclusive or exclusive. For example, "or" between multiple items in a list may be one or more of each item, only one of a single item, each item, or any combination of items in the list.

Computing systems described above may include one or more computer processors, non-persistent storage, persistent storage, a communication interface (e.g., Bluetooth interface, infrared interface, network interface, optical interface, etc.), and numerous other elements and functionalities that implement the features and elements of the disclosure. The computer processor(s) may be an integrated circuit for processing instructions. For example, the computer processor(s) may be one or more cores or micro-cores of a processor. The computing system may also include one or more input/output devices, such as a touchscreen, keyboard, mouse, microphone, touchpad, electronic pen, or any other type of input device.

Software instructions in the form of computer readable program code to perform embodiments of the disclosure may be stored, in whole or in part, temporarily or permanently, on a non-transitory computer readable medium. Specifically, the software instructions may correspond to computer readable program code that, when executed by a processor(s), is configured to perform one or more embodiments of the disclosure.

While the invention has been described with respect to a limited number of embodiments, those skilled in the art, having benefit of this disclosure, will appreciate that other embodiments can be devised which do not depart from the scope of the invention as defined by the attached claims.

## Claims

1. A computer-implemented method of processing an input frame using a machine learning model, the method comprising:
training (601), on a computing system, the machine learning model using training data, the machine learning model comprising a floating point version of a model feature extractor and a floating point version of a model feature aggregator;
determining a first part of the model from the floating point version of the model feature extractor using a quantization process, such that the first part of the model comprises a fixed point version of the model feature extractor, and wherein the second part of the model comprises the floating point version of the model feature aggregator;
deploying the first part of the model on an input device comprising an embedded processor;
deploying the second part of the model on a processing device;
acquiring (701), by the input device, the input frame wherein the input frame comprises a frame of an audio or video signal;
executing (703), by the embedded processor of the input device, the fixed point version of the model feature extractor on the input frame to obtain a plurality of extracted features of the input frame;
transmitting (705) the plurality of extracted features from the input device to the processing device;
receiving (709), from the processing device, a model result resulting from the model feature aggregator processing the plurality of extracted features on the processing device; and
processing (711) the model result.

2. The method of claim 1, wherein the model feature extractor executes a first neural network layer of the machine learning model on the input frame, and wherein the model feature aggregator executes a second neural network layer of the machine learning model on the plurality of extracted features.

3. The method of claim 1, further comprising:
executing a plurality of model feature aggregators (502, 504) of a plurality of machine learning models on the plurality of extracted features, wherein:
the model feature extractor is a common model feature extractor (500) for the plurality of machine learning models, and
the model feature aggregator is one of the plurality of model feature aggregators (502, 504).

4. The method of claim 1, wherein the model feature aggregator is a first model feature aggregator, and the model result is a first model result, and wherein the method further comprises:
executing, on the input device, a second model feature aggregator on the plurality of extracted features to obtain a second model result; and
processing the second model result.

5. The method of claim 1, further comprising:
capturing, by a camera in the input device, a video stream; and
extracting the input frame from the video stream, wherein the input frame is a video frame.

6. The method of claim 5, wherein
executing the model feature extractor comprises executing a first subset of neural network layers of a convolutional neural network on the video frame, and
processing the model feature aggregator comprises executing a second subset of the neural network layers of the CNN on the plurality of extracted features.

7. The method of claim 1, further comprising:
capturing, by a microphone in the input device, an audio stream; and
extracting the input frame from the audio stream, wherein the input frame is a sample of audio in the audio stream.

8. The method of claim 1:
wherein the processing device executes (707) a model feature aggregator to process the plurality of extracted features and obtain a model result.

9. A system comprising:
a computing system, an input device and a processing device,
the computing system comprising a hardware processor configured to execute a model training system (200) to train a floating-point version of a model feature extractor (208) and a model feature aggregator (210), and configured to determine a first part of the model comprising a fixed point version of the model feature extractor from the floating point version of the model feature extractor using a quantization process, and to deploy the first part of the model on the input device, and further configured to deploy a second part of the model comprising the floating point version of the model feature aggregator on the processing device;
the input device (302) comprising:
an input stream sensor (322) configured to capture an input stream comprising an input frame (320), wherein the input frame comprises a frame of an audio or video signal, and
an embedded processor (314) configured to execute the model feature extractor (216) on the input frame (320) to obtain a plurality of extracted features (328) of the input frame (320); and
an input device port (324) configured to transmit the plurality of extracted features (328) from the input device to the processing device (304), and
the processing device (304) comprising:
memory (318) storing the model feature aggregator (218); and
a hardware processor (316) configured to execute the model feature aggregator (218) stored in the memory (318) by processing the plurality of extracted features to obtain a model result.

## Patentansprüche

1. Computerimplementiertes Verfahren zum Verarbeiten eines Eingaberahmens unter Verwendung eines maschinellen Lernmodells, wobei das Verfahren umfasst:
Trainieren (601), auf einem Rechnersystem, des maschinellen Lernmodells unter Verwendung von Trainingsdaten, wobei das maschinelle Lernmodell eine Gleitkommaversion eines Modellmerkmalextraktors und eine Gleitkommaversion eines Modellmerkmalaggregators umfasst;
derartiges Bestimmen eines ersten Teils des Modells von der Gleitkommaversion des Modellmerkmalextraktors unter Verwendung eines Quantisierungsprozesses, dass der erste Teil des Modells eine Festkommaversion des Modellmerkmalextraktors umfasst, und wobei der zweite Teil des Modells die Gleitkommaversion des Modellmerkmalaggregators umfasst;
Bereitstellen des ersten Teils des Modells auf einer Eingabevorrichtung, die einen eingebetteten Prozessor umfasst;
Bereitstellen des zweiten Teils des Modells auf einer Verarbeitungsvorrichtung;
Erlangen (701), durch die Eingabevorrichtung, des Eingaberahmens, wobei der Eingaberahmen einen Rahmen eines Audio- oder Videosignals umfasst;
Ausführen (703), durch den eingebetteten Prozessor der Eingabevorrichtung, der Festkommaversion des Modellmerkmalextraktors auf dem Eingaberahmen, um eine Vielzahl von extrahierten Merkmalen des Eingaberahmens zu erhalten;
Übertragen (705) der Vielzahl von extrahierten Merkmalen von der Eingabevorrichtung an die Verarbeitungsvorrichtung;
Empfangen (709), von der Verarbeitungsvorrichtung, eines Modellergebnisses, das sich aus einem Verarbeiten der Vielzahl von extrahierten Merkmalen durch den Modellmerkmalaggregator auf der Verarbeitungsvorrichtung ergibt; und
Verarbeiten (711) des Modellergebnisses.

2. Verfahren nach Anspruch 1, wobei der Modellmerkmalextraktor eine erste neuronale Netzwerkschicht des maschinellen Lernmodells auf dem Eingaberahmen ausführt, und wobei der Modellmerkmalaggregator eine zweite neuronale Netzwerkschicht des maschinellen Lernmodells auf der Vielzahl von extrahierten Merkmalen ausführt.

3. Verfahren nach Anspruch 1, das ferner umfasst:
Ausführen einer Vielzahl von Modellmerkmalaggregatoren (502, 504) einer Vielzahl von maschinellen Lernmodellen auf der Vielzahl von extrahierten Merkmalen, wobei:
der Modellmerkmalextraktor ein gemeinsamer Modellmerkmalextraktor (500) für die Vielzahl von maschinellen Lernmodellen ist, und
der Modellmerkmalaggregator einer der Vielzahl von Modellmerkmalaggregatoren (502, 504) ist.

4. Verfahren nach Anspruch 1, wobei der Modellmerkmalaggregator ein erster Modellmerkmalaggregator ist und das Modellergebnis ein erstes Modellergebnis ist, und wobei das Verfahren ferner umfasst:
Ausführen, auf der Eingabevorrichtung, eines zweiten Modellmerkmalaggregators auf der Vielzahl von extrahierten Merkmalen, um ein zweites Modellergebnis zu erhalten; und
Verarbeiten des zweiten Modellergebnisses.

5. Verfahren nach Anspruch 1, das ferner umfasst:
Erfassen, durch eine Kamera in der Eingabevorrichtung, eines Videostroms; und
Extrahieren des Eingaberahmens aus dem Videostrom, wobei der Eingaberahmen ein Videorahmen ist.

6. Verfahren nach Anspruch 5, wobei
ein Ausführen des Modellmerkmalextraktors ein Ausführen einer ersten Teilmenge von neuronalen Netzwerkschichten eines faltungsneuronalen Netzwerks auf dem Videorahmen umfasst, und
ein Verarbeiten des Modellmerkmalaggregators ein Ausführen einer zweiten Teilmenge der neuronalen Netzwerkschichten des CNN auf der Vielzahl von extrahierten Merkmalen umfasst.

7. Verfahren nach Anspruch 1, das ferner umfasst:
Erfassen, durch ein Mikrofon in der Eingabevorrichtung, eines Audiostroms; und
Extrahieren des Eingaberahmens aus dem Audiostrom, wobei der Eingaberahmen eine Probe von Audio in dem Audiostrom ist.

8. Verfahren nach Anspruch 1:
wobei die Verarbeitungsvorrichtung einen Modellmerkmalaggregator ausführt (707), um die Vielzahl von extrahierten Merkmalen zu verarbeiten und ein Modellergebnis zu erhalten.

9. System, das umfasst:
ein Rechnersystem, eine Eingabevorrichtung und eine Verarbeitungsvorrichtung,
wobei das Rechnersystem einen Hardware-Prozessor umfasst, der dazu konfiguriert ist, ein Modelltrainingssystem (200) auszuführen, um eine Gleitkommaversion eines Modellmerkmalextraktors (208) und eines Modellmerkmalaggregators (210) zu trainieren, und dazu konfiguriert ist, einen ersten Teil des Modells, der eine Festkommaversion des Modellmerkmalextraktors aus der Gleitkommaversion des Modellmerkmalextraktors umfasst, unter Verwendung eines Quantisierungsprozesses zu bestimmen, und um den ersten Teil des Modells auf der Eingabevorrichtung bereitzustellen, und ferner konfiguriert ist, um einen zweiten Teil des Modells, der die Gleitkommaversion des Modellmerkmalaggregators umfasst, auf der Verarbeitungsvorrichtung bereitzustellen;
wobei die Eingabevorrichtung (302) umfasst:
einen Eingangsstromsensor (322), der dazu konfiguriert ist, einen Eingangsstrom, der einen Eingangsrahmen (320) umfasst, zu erfassen, wobei der Eingangsrahmen einen Rahmen eines Audio- oder Videosignals umfasst, und
einen eingebetteten Prozessor (314), der dazu konfiguriert ist, den Modellmerkmalextraktor (216) auf dem Eingaberahmen (320) auszuführen, um eine Vielzahl von extrahierten Merkmalen (328) des Eingaberahmens (320) zu erhalten; und
eine Eingabevorrichtungsschnittstelle (324), die dazu konfiguriert ist, die Vielzahl von extrahierten Merkmalen (328) von der Eingabevorrichtung an die Verarbeitungsvorrichtung (304) zu übertragen, und
wobei die Verarbeitungsvorrichtung (304) umfasst:
Speicher (318), der den Modellmerkmalaggregator (218) speichert; und
einen Hardware-Prozessor (316), der dazu konfiguriert ist, den Modellmerkmalaggregator (218), der in dem Speicher (318) gespeichert ist, durch ein Verarbeiten der Vielzahl von extrahierten Merkmalen auszuführen, um ein Modellergebnis zu erhalten.

## Revendications

1. Procédé mis en œuvre par ordinateur de traitement d'une trame d'entrée à l'aide d'un modèle d'apprentissage automatique, le procédé comprenant :
l'entraînement (601), sur un système informatique, du modèle d'apprentissage automatique à l'aide de données d'entraînement, le modèle d'apprentissage automatique comprenant une version en virgule flottante d'un extracteur de caractéristiques de modèle et une version en virgule flottante d'un agrégateur de caractéristiques de modèle ;
la détermination d'une première partie du modèle à partir de la version en virgule flottante de l'extracteur de caractéristiques de modèle à l'aide d'un processus de quantification, de telle sorte que la première partie du modèle comprend une version en virgule fixe de l'extracteur de caractéristiques de modèle, et dans lequel la seconde partie du modèle comprend la version en virgule flottante de l'agrégateur de caractéristiques de modèle ;
le déploiement de la première partie du modèle sur un dispositif d'entrée comprenant un processeur intégré ;
le déploiement de la seconde partie du modèle sur un dispositif de traitement ;
l'acquisition (701), par le dispositif d'entrée, de la trame d'entrée dans lequel la trame d'entrée comprend une trame d'un signal audio ou vidéo ;
l'exécution (703), par le processeur intégré du dispositif d'entrée, de la version en virgule fixe de l'extracteur de caractéristiques de modèle sur la trame d'entrée pour obtenir une pluralité de caractéristiques extraites de la trame d'entrée ;
la transmission (705) de la pluralité de caractéristiques extraites du dispositif d'entrée au dispositif de traitement ;
la réception (709), à partir du dispositif de traitement, d'un résultat de modèle résultant du traitement par l'agrégateur de caractéristiques de modèle de la pluralité de caractéristiques extraites sur le dispositif de traitement ; et
le traitement (711) du résultat de modèle.

2. Procédé selon la revendication 1, dans lequel l'extracteur de caractéristiques de modèle exécute une première couche de réseau neuronal du modèle d'apprentissage automatique sur la trame d'entrée, et dans lequel l'agrégateur de caractéristiques de modèle exécute une seconde couche de réseau neuronal du modèle d'apprentissage automatique sur la pluralité de caractéristiques extraites.

3. Procédé selon la revendication 1, comprenant en outre :
l'exécution d'une pluralité d'agrégateurs de caractéristiques de modèle (502, 504) d'une pluralité de modèles d'apprentissage automatique sur la pluralité de caractéristiques extraites, dans lequel :
l'extracteur de caractéristiques de modèle est un extracteur de caractéristiques de modèle commun (500) pour la pluralité de modèles d'apprentissage automatique, et
l'agrégateur de caractéristiques de modèle est l'un de la pluralité d'agrégateurs de caractéristiques de modèle (502, 504).

4. Procédé selon la revendication 1, dans lequel l'agrégateur de caractéristiques de modèle est un premier agrégateur de caractéristiques de modèle, et le résultat de modèle est un premier résultat de modèle, et dans lequel le procédé comprend en outre :
l'exécution, sur le dispositif d'entrée, d'un second agrégateur de caractéristiques de modèle sur la pluralité de caractéristiques extraites pour obtenir un second résultat de modèle ; et
le traitement du second résultat de modèle.

5. Procédé selon la revendication 1, comprenant en outre :
la capture, par une caméra dans le dispositif d'entrée, d'un flux vidéo ; et
l'extraction de la trame d'entrée du flux vidéo, dans lequel la trame d'entrée est une trame vidéo.

6. Procédé selon la revendication 5, dans lequel
l'exécution de l'extracteur de caractéristiques de modèle comprend l'exécution d'un premier sous-ensemble de couches de réseau neuronal d'un réseau neuronal convolutif sur la trame vidéo, et
le traitement de l'agrégateur de caractéristiques de modèle comprend l'exécution d'un second sous-ensemble de couches de réseau neuronal du réseau neuronal convolutif sur la pluralité de caractéristiques extraites.

7. Procédé selon la revendication 1, comprenant en outre :
la capture, par un microphone dans le dispositif d'entrée, d'un flux audio ; et
l'extraction de la trame d'entrée du flux audio, dans lequel la trame d'entrée est un échantillon d'audio dans le flux audio.

8. Procédé selon la revendication 1 :
dans lequel le dispositif de traitement exécute (707) un agrégateur de caractéristiques de modèle pour traiter la pluralité de caractéristiques extraites et obtenir un résultat de modèle.

9. Système comprenant :
un système informatique, un dispositif d'entrée et un dispositif de traitement,
le système informatique comprenant un processeur matériel configuré pour exécuter un système d'entraînement de modèle (200) pour entraîner une version en virgule flottante d'un extracteur de caractéristiques de modèle (208) et d'un agrégateur de caractéristiques de modèle (210), et configuré pour déterminer une première partie du modèle comprenant une version en virgule fixe de l'extracteur de caractéristiques de modèle à partir de la version en virgule flottante de l'extracteur de caractéristiques de modèle à l'aide d'un processus de quantification, et pour déployer la première partie du modèle sur le dispositif d'entrée, et configuré en outre pour déployer une seconde partie du modèle comprenant la version en virgule flottante de l'agrégateur de caractéristiques de modèle sur le dispositif de traitement ;
le dispositif d'entrée (302) comprenant :
un capteur de flux d'entrée (322) configuré pour capturer un flux d'entrée comprenant une trame d'entrée (320), dans lequel la trame d'entrée comprend une trame d'un signal audio ou vidéo, et
un processeur intégré (314) configuré pour exécuter l'extracteur de caractéristiques de modèle (216) sur la trame d'entrée (320) pour obtenir une pluralité de caractéristiques extraites (328) de la trame d'entrée (320) ; et
un port de dispositif d'entrée (324) configuré pour transmettre la pluralité de caractéristiques extraites (328) du dispositif d'entrée au dispositif de traitement (304), et
le dispositif de traitement (304) comprenant :
une mémoire (318) stockant l'agrégateur de caractéristiques de modèle (218) ; et
un processeur matériel (316) configuré pour exécuter l'agrégateur de caractéristiques de modèle (218) stocké dans la mémoire (318) en traitant la pluralité de caractéristiques extraites pour obtenir un résultat de modèle.
